# EUROPEAN PATENT APPLICATION

(11) **EP 4 803 566 A1**
(43) Date of publication of application: **09.09.2026**
(21) Application number: 26151599.3
(22) Date of filing: 13.01.2026
(51) Int. Cl.: C08J 11/08, B29B 17/02, D01F 6/70

(54) **METHOD FOR THE RECOVERY OF ELASTANE, POLYAMIDE AND WOOL FROM FABRICS**

(30) Priority: 04.03.2025 IT 202500004374
(71) Applicant: Marzotto Wool Manufacturing S.r.l., 36078 Valdagno (Vicenza) (IT); Re-Sport S.r.l, 40127 Bologna (IT)
(72) Inventor: LOVO, Roberto, I-36078 Valdagno, VICENZA (IT); TODESCO, Giorgio, I-36078 Valdagno, VICENZA (IT); DALBELLO, Rino, I-31011 Asolo, TREVISO (IT)
(74) Representative: Long, Giorgio

(57) **Abstract**

The present invention relates to a method for the recovery of Elastane, polyamide and wool fibers from fabrics.

In particular, the present invention concerns a method for recovering the fibers forming a complex product, in particular an item of clothing or a fabric, containing Elastane, polyamide and wool fibers, comprising the following steps:
a) optionally, pretreating a textile product or material to form a textile material in pieces;
b) extracting the polyamide from the textile product or material, optionally treated according to step a), by means of a solvent mixture of water, alcohols and alkali or alkali-earth metal salts to obtain a solution and a solid residue;
c) extracting the Elastane from the solid residue of step b) by means of a protic or aprotic dipolar solvent to obtain a solution and a wool-based solid residue;
d) possibly washing the wool-based solid residue and drying said solid residue and, optionally, said wool-based solid residue to obtain fibers or flake;
e) recovering the polyamide from the solution of step b);
f1) recovering the Elastane from the solution of step c) by precipitation with addition of a nonsolvent, or
f2) concentrating the Elastane solution of step c) by partial evaporation of the solvent and using the resulting concentrated solution for the production of yarns, coatings or membranes.

## Description

The present invention relates to a method for the recovery of Elastane, polyamide and wool fibers from fabrics.

### Prior Art

In a sustainable economy, the recovery of raw materials from discarded products has become increasingly important. Used garments and fabrics, as well as textile scraps, are an important source of fibers, including high-quality fibers.

However, the fact that such products often contain a mixture of different fibers makes their recovery difficult.

The process of selective dissolution of Elastane is known in the literature and has mainly been carried out on polyamide/Elastane combinations, such as in the LIFE (RE-TIGHTS) process led by Calzedonia/Goldenlady, which uses dimethylacetamide as the extraction solvent. The Elastane is then recovered by precipitation with the addition of a non-solvent (water or ethanol) or by evaporation.

The main problem of the process is related to the evaporation of the solvent, which is high-boiling (above 150°C), and also to the high viscosity that is created during the evaporation process, which makes it difficult to fully recover the solvent. The precipitation process is not convenient due to the costs and the energy required for the separation between the solvent and the non-solvent (generally water or ethanol).

The liquid obtained from the dissolution can be used, for example, for dry spinning (the technique almost entirely used to produce Elastane yarns, for instance by Lycra). However, the limitation of this process is that in certain countries, such as Italy, it is not allowed, being usable only in Turkey, Ireland and Asia.

No one has attempted to recycle wool/Elastane yarns with this process, although tests have been carried out on wool/Elastane fiber blends with various solvents.

Various methods for the dissolution of polyamide exist. The first polyamide dissolution process was reported in the 1970s by Japanese researchers, and more recently the dissolution of polyamide from mixed fibers with wool has been described.

There is therefore still a need to provide a method that allows the recovery of all the fibers forming a complex product, in particular an item of clothing or a fabric, specifically containing Elastane, polyamide and wool fibers.

### Summary of the Invention

The present invention therefore relates to a method for recovering the fibers forming a complex product, in particular an item of clothing or a fabric, containing Elastane, polyamide and wool fibers, as defined in the appended claims, the text of which is to be considered an integral part of the present description for the purposes of sufficiency of disclosure.

In particular, an object of the invention is a method for recovering the fibers forming a complex product, in particular an item of clothing or a fabric, containing Elastane, polyamide and wool fibers, comprising the following steps:
a) optionally, pretreating a textile product or material to form a textile material in pieces;
b) extracting the polyamide from the textile product or material, optionally treated according to step a), by means of a solvent mixture of water, alcohols and alkali or alkali-earth metal salts to obtain a solution and a solid residue;
c) extracting the Elastane from the solid residue of step b) by means of a protic or aprotic dipolar solvent to obtain a solution and a wool-based solid residue;
d) optionally washing the wool-based solid residue and drying said solid residue and, optionally, said wool-based solid residue to obtain fibers or flake;
e) recovering the polyamide from the solution of step b);
f1) recovering the Elastane from the solution of step c) by precipitation with addition of a non-solvent, or
f2) concentrating the Elastane solution of step c) by partial evaporation of the solvent and using the resulting concentrated solution for the production of yarns, coatings or membranes.

### Detailed Description of the Invention

The present invention relates to a method for recovering the fibers forming a complex product, in particular an item of clothing or a fabric, containing Elastane, polyamide and wool fibers, comprising the following steps:
a) optionally, pretreating a textile product or material to form a textile material in pieces;
b) dissolution and extraction of the polyamide from the textile product or material, optionally treated according to step a), by using a solvent mixture of water, alcohols and alkali or alkali-earth metal salts to obtain a solution and a solid residue;
c) extracting the Elastane from the solid residue of step b) by means of a protic or aprotic dipolar solvent to obtain a solution and a wool-based solid residue;
d) optionally washing the wool-based solid residue and drying said solid residue and, optionally, processing said wool-based solid residue to obtain fibers or flake;
e) recovering the polyamide from the solution of step b) by partial or complete evaporation of the solvent or by precipitation following the addition of a non-solvent;
f1) recovering the Elastane from the solution of step c) by precipitation with addition of a non-solvent, or
f2) concentrating the Elastane solution of step c) by partial evaporation of the solvent and using the resulting concentrated solution for the production of yarns, coatings or membranes.

In a different embodiment, the method of the invention comprises the following steps:
A) optionally, pretreating a textile product to form a textile material in pieces;
B) extracting the Elastane from the textile product or material, optionally treated according to step A), by means of a protic or aprotic dipolar solvent to obtain a solution and a solid residue;
C) extracting the polyamide from the solid residue of step B) by means of a solvent mixture of water, alcohols and alkali or alkali-earth metal salts to obtain a solution and a wool-based solid residue;
D) optionally washing the wool-based solid residue and drying said solid residue and, optionally, processing said wool-based solid residue to obtain fibers or flake;
E) recovering the polyamide from the solution of step C) by partial or complete evaporation of the solvent or by precipitation following the addition of a non-solvent;
F1) recovering the Elastane from the solution of step B) by precipitation with addition of a non-solvent, or
F2) concentrating the Elastane solution of step B) by partial evaporation of the solvent and using the resulting concentrated solution for the production of yarns, coatings or membranes.

Step a) or A) comprises shredding the textile material or product into pieces of reduced size, preferably of dimensions smaller than 20 cm per side. Said operation can be carried out, for example, as described in Italian patent No. 102019000004175 of the same Applicant, i.e., by performing a double transverse cut to form square or rectangular pieces.

The textile product of step a) or A) may be, for example, a used or waste garment, blanket or the like, or a scrap of fabric, used or waste, or a set of waste yarns.

Step b) or C) of extracting the polyamide from a solid residue is preferably carried out with a mixture of alcohol/water/alkali or alkali-earth metal salt in a weight ratio between 7:1:2 and 5:1:4, or of about 6:1:3. Preferably, said step b) or C) is carried out at a temperature between 30°C and 50°C, more preferably about 40°C. The treatment time will generally be greater than 20 minutes and less than 2 hours, preferably between 25 and 35 minutes or about 30 minutes, but longer durations may also be used.

Preferably, the alcohol used is ethanol and the salt is calcium chloride hydrate.

The amount of alcohol/water/alkali or alkali-earth metal salt mixture used will be at least 5 L per kg of solid, preferably at least 10 L per kg of solid.

The treatment is preferably carried out under stirring.

Step e) or E) of recovering the polyamide is carried out by evaporation of the solvent or by precipitation of the polyamide through the addition of a non-solvent, for example water. The resulting solid polyamide is then subjected to a washing step with hot water and surfactants or acid compounds or ion exchange resins to eliminate the calcium chloride salt. Its reuse will be in the field of fibers or thermoplastic materials.

Step c) or B) of extracting the Elastane from the solid is preferably carried out with a solvent selected from dimethylformamide (DMF), dimethylacetamide (DMA), dihydrolevoglucosenone (Cyrene), dimethyl sulfoxide (DMSO), also in mixture with THF, and tetrahydrofurfuryl alcohol or mixtures of these solvents. More preferably, DMF or DMA will be used.

Step c) or B) is preferably carried out at a temperature greater than 80°C and less than 100°C, more preferably at about 90°C. The treatment time is preferably between 30 minutes and 2 hours, more preferably between 50 minutes and 70 minutes.

The amount of solvent used is preferably between 9 and 11 L per kg of solid.

The treatment is preferably carried out under stirring.

In step d) or D), the optional shredding of the wool residue to form fibers or flake is facilitated by the fact that the textile material or product has already been treated for the extraction of Elastane and polyamide. The resulting wool-based textile material in fact has a looser structure, which makes the shredding operation easier and more effective.

Step f1) or F1) is preferably carried out by adding to the solution of steps c) or B), respectively, water or an alcohol, more preferably ethanol.

In step f2) or F2), the solvent is evaporated to a concentration of Elastane between 10% and 30% by weight. The subsequent coating, spinning or membrane production steps are conducted according to conventional methods, which will therefore not be described in further detail.

Step d) or D), when necessary, is carried out with hot water, preferably at a temperature of at least 50°C or at least 60°C and preferably lower than 70°C.

In the case of extraction according to step B) of the Elastane fraction, wool with lower solvent residues is obtained due to the subsequent water/ethanol treatment of step C), but a further washing in hot water is necessary to remove the residual salt according to step d) or D). If instead the polyamide is extracted first according to step b) in water/ethanol/calcium chloride and then step c) of Elastane extraction is performed, the hot water washing on the wool is not necessary, but the wool must be dried to avoid the presence of residual DMF.

The wool obtained according to the method of the invention was analyzed for its mechanical properties, as shown in the following table:

| Test | First bath | second bath | Strength | Strength min | CV% Strength | Elong.% | Elong min | CV% All. |
|---|---|---|---|---|---|---|---|---|
| | | | cN | cN | | | | |
| | **Virgin yarn 0738 1/38 09555** | | **162,3** | **112,8** | **13,1** | **11,6** | **4,4** | **33,4** |
| A | Ethanol + water + calcium chloride hydrate | DMF | 136,3 | 107,9 | 9,0 | 33,4 | 27,1 | 10,7 |
| B | DMF | Ethanol + water + calcium chloride hydrate + subsequent washing in hot water 60°C | 136,7 | 106,9 | 10,2 | 24,2 | 5,9 | 28,0 |

Although the mechanical properties are lower than those of virgin wool, they are nevertheless at a level that allows the reuse of the wool as recycled wool.

### EXAMPLE

The selective dissolution of the Elastane in DMA (dimethylacetamide) was carried out at T = 90°C, for t = 1 h, under stirring at 50 rpm. 50 mL of DMA were used for 5 g of solid.
The selective dissolution of the polyamide was carried out at T = 40°C, to increase solubility, for t = 30 min.

### Solvent mixture:

- CaCl₂ hydrate → 13.9 g
- H₂O → 4.5 g
- Ethanol → 28.75 g

The test was carried out on a fabric sample of 0.55 g, and an amount of PA equal to 90% of that declared on the label (78% wool and 23% PA) was recovered. It is essential to remove the salt from the polyamide by washing with hot water and surfactants or acid compounds or ion exchange resins before it can be reused.

It is evident that only some specific embodiments of the present invention have been described, to which the person skilled in the art will be able to make all those modifications necessary for its adaptation to specific applications, without thereby departing from the scope of protection defined by the claims of the present invention.

## Claims

1. A method for recovering the fibers forming a complex product, in particular an item of clothing or a fabric, containing Elastane, polyamide and wool fibers, comprising the following steps:
a) optionally, pre-treating a textile product or material to form a textile material in pieces;
b) extracting the polyamide from the textile product or material, optionally treated according to step a), by means of a solvent mixture of water, alcohols and alkali or alkali-earth metal salts to obtain a solution and a solid residue;
c) extracting the Elastane from the solid residue of step b) by means of a protic or aprotic dipolar solvent to obtain a solution and a wool-based solid residue;
d) optionally washing the wool-based solid residue and drying said solid residue and optionally said wool-based solid residue to obtain fibers or flake;
e) recovering the polyamide from the solution of step b);
f1) recovering the Elastane from the solution of step c) by precipitation with addition of a non-solvent, or
f2) concentrating the Elastane solution of step c) by partial evaporation of the solvent and using the resulting concentrated solution for producing yarns, coatings or membranes.

2. A method for recovering the fibers forming a complex product, in particular an item of clothing or a fabric, containing Elastane, polyamide and wool fibers, comprising the following steps:
A) optionally, pre-treating a textile product to form a textile material in pieces;
B) extracting the Elastane from the textile product or material, optionally treated according to step A), by means of a protic or aprotic dipolar solvent to obtain a solution and a solid residue;
C) extracting the polyamide from the solid residue of step B) by means of a solvent mixture of water, alcohols and alkali or alkali-earth metals salts to obtain a solution and a wool-based solid residue;
D) optionally washing the wool-based solid residue and drying said solid residue and, optionally, said wool-based solid residue to obtain fibers or flake;
E) recovering the polyamide from the solution of step C);
F1) recovering the Elastane from the solution of step B) by precipitation with addition of a non-solvent, or
F2) concentrating the Elastane solution of step B) by partial evaporation of the solvent and using the resulting concentrated solution for producing yarns, coatings or membranes.

3. The method according to claim 1 or 2, wherein step b) or C) of extracting the polyamide from a solid residue is carried out with an alcohol/water/alkali or alkali-earth metal salt mixture in a weight ratio between 7:1:2 and 5:1:4, or of about 6:1:3, preferably at a temperature between 30°C and 50°C, more preferably about 40°C.

4. The method according to claim 3, wherein the alcohol is ethanol and the salt is calcium chloride hydrate.

5. The method according to claim 3 or 4, wherein the amount of alcohol/water/alkali or alkali-earth metal salt mixture is at least 5 L per kg of solid, preferably at least 10 L per kg of solid.

6. The method according to any one of claims 1 to 5, wherein step e) or E) of recovering the polyamide is carried out by evaporating the solvent or by precipitating the polyamide with addition of a non-solvent, preferably water, followed by washing the polyamide with hot water and surfactants or acid compounds or ion exchange resins to eliminate the calcium chloride salt.

7. The method according to any one of claims 1 to 6, wherein step c) or B) of extracting the Elastane from the solid is preferably carried out with a solvent selected from dimethylformamide (DMF), dimethylacetamide (DMA), dihydrolevoglucosenone (Cyrene), dimethyl sulfoxide (DMSO), also in mixture with THF, and tetrahydrofurfuryl alcohol or mixtures of these solvents, preferably DMF or DMA, preferably at a temperature greater than 80°C and less than 100°C, more preferably at about 90°C.

8. The method according to claim 7, wherein the amount of solvent is between 9 and 11 L per kg of solid.

9. The method according to any one of claims 1 to 8, wherein step f1) or F1) is carried out by adding water or an alcohol, more preferably ethanol, to the solution of steps c) or B), respectively.

10. The method according to any one of claims 1 to 9, wherein in step f2) or F2), the solvent is evaporated to a concentration of Elastane between 10% and 30% by weight.

11. The method according to any one of claims 1 to 10, wherein step d) or D), when performed, is carried out with hot water, preferably at a temperature of at least 50°C or at least 60°C and preferably less than 70°C.

12. The method according to any one of claims 1 to 11, wherein the textile product of step a) or A) is a used or waste garment, blanket or the like, or a scrap of used or waste fabric, or a set of waste yarns.

13. Use of the Elastane solution of step f2) or F2) for operations of coating, spinning, in particular dry spinning, and membrane formation.
